# EUROPEAN PATENT APPLICATION

(11) **EP 1 897 764 A1**
(43) Date of publication of application: **12.03.2008**
(21) Application number: 07114512.2
(22) Date of filing: 17.08.2007
(51) Int. Cl.: B60R 21/272, B60R 21/264

(54) **Inflator**

(30) Priority: 07.09.2006 JP 2006242539
(71) Applicant: TAKATA CORPORATION, Minato-ku, Tokyo 106-8510 (JP)
(72) Inventor: Yano, Kanji, Tokyo Tokyo 106-8510 (JP)
(74) Representative: Vossius & Partner

(57) **Abstract**

The inflator satisfies both of the strength of a first impact of the airbag and a keeping operation for a duration of expansion of the airbag. The inflator 100 supplies gas into an airbag mounted on a motor vehicle and deploys the same. A first chamber 1e where a gas-blowing outlet 1f is provided and a gas-generating agent 7 generating the gas while being ignited by means of an initiator 5 is encapsulated. A filter 8 is arranged between the gas-blowing outlet 1f of the first chamber 1e and the gas-generating agent 7, absorbs heat of combustion of the gas-generating agent 7, and captures a residue thereof. A second chamber 1d is partitioned from the first chamber 1 e with a flow amount control member 2 where the compressed gas 6 is encapsulated. A blocking member 2b of a control hole 2a of the flow amount control member 2 is provided which opens the control hole 2a by being ruptured or removed by expanding pressure of the gas-generating agent 7 (Fig. 1).

## Description

The present invention relates to an inflator (gas generator) that is equipped on a motor vehicle (automobile), which causes an airbag, such as a curtain airbag or the like for restraining an occupant when a rollover (overturn) or the like of the motor vehicle occurs, to be inflated and deployed.

Hitherto, in gas generators (inflator) for use in inflating an airbag for the purpose of safety of a motor vehicle, provided with a main body including an ignition device (initiator), and a reserver (gas-chamber) being connected to the main body for housing a compressed gas, and further provided with a discharging orifice where the reserver is blocked in an initial stage, the gas generator where the aforementioned main body includes a first gunpowder capable of generating a predetermined amount of gas capable of inflating the airbag in a period within 50msec while being interlocked with the predetermined amount of gas housed in the reserver, and a second gunpowder capable of generating the gas in sufficient amount for keeping the airbag in an inflated condition for several seconds after the first gunpowder has burnt, is known (for example, refer to JP-A-2003-81050).

However, according to the aforementioned hitherto known technology, when a hole diameter of the discharging orifice is set so that the airbag is inflated within 50msec by means of the first gunpowder, a discharging time for discharging the compressed gas generated by means of the second gunpowder becomes short, and when the hole diameter of the discharging orifice is set to be small so that the discharging time for discharging the compressed gas generated by means of the second gunpowder becomes long, a strength of a first impact by means of the first gunpowder (initial rapid deployment of the airbag) becomes weak. This is because the discharging orifice for discharging the gas is directly provided in the reserver for housing the compressed gas at an opposite side of the main body for housing the gunpowder. Consequently, there has been a problem in which it is difficult to satisfy both of a strength of a first impact of the airbag and a keeping operation for a duration of expansion of the airbag.

The present invention is made in light of the above-described problems and an object of the present invention is to obtain an inflator capable of satisfying both of a strength of a first impact of the airbag and a keeping operation for a duration of expansion of the airbag.

So as to solve the above-described problems, and to achieve the object, an inflator according to Claim 1 is characterized in that the inflator is for supplying gas into an airbag mounted on a motor vehicle and for deploying the airbag. The inflator includes a first chamber where a gas blowing-outlet is provided and a gas-generating agent generating the gas by being ignited by an initiator is encapsulated, a filter intervening between a gas blowing-outlet of the first chamber and the gas-generating agent, and absorbing heat of combustion of the gas-generating agent, and capturing a residue of the gas-generating agent, a second chamber partitioned from the first chamber with a flow amount control member where compressed gas is encapsulated, and a blocking member of a control hole of the flow amount control member for opening the control hole by being ruptured or removed by expanding pressure of the gas-generating agent.

The present invention according to Claim 2 is characterized in that in the inflator according to Claim 1, the first and second chambers are formed in a cylindrical housing, and the gas blowing-outlet is formed to be directed to a radial direction in an outer peripheral portion of the cylindrical housing.

The present invention according to Claim 3 is characterized in that in the inflator according to Claim 2, the filter is formed into a cylindrical shape and is installed in a close contact manner to an inner wall of the first chamber.

The present invention according to Claim 4 is characterized in that in the inflator according to any one of Claims 1 through 3, the compressed gas contains nitrous oxide gas.

The present invention according to Claim 5 is characterized in that in the inflator according to any one of Claims 1 through 4, the airbag is a curtain airbag capable of deploying at a side portion of a vehicle interior.

According to the present invention described in Claim 1, both of a strength of a first impact of the airbag and a keeping operation for a duration of expansion of the airbag can be satisfied.

According to the present invention described in Claim 2, gas generated by a gas-generating agent in the first chamber can rapidly be blown out, and a compressed gas in the second chamber can slowly be blown out.

According to the present invention described in Claim 3, the first impact of the airbag can be strengthened by maximizing a square measure of a filter, and reducing a passing resistance of the gas generated by means of the gas-generating agent.

According to the present invention described in Claim 4, nitrous oxide gas is decomposed by heat of the filter into nitrogen and oxygen (2N₂O → 2N₂ + O₂), and the total number of gas moles becomes 1.5 times that of the nitrous oxide gas before decomposition thereof. Therefore, the cylindrical housing can be compact sized.

According to the present invention described in Claim 5, both of a strength of a first impact of the airbag and a keeping operation for a duration of expansion of the airbag can be satisfied.

Hereinafter, an embodiment of the present invention will be explained with reference to the drawings.
Fig. 1 is a cross-sectional view showing an embodiment of an inflator according to the present invention;
Fig. 2 is a cross-sectional view showing a condition just after the initiator is ignited;
Fig. 3 is a cross-sectional view showing a condition after approximately one second has passed from ignition of the initiator; and
Fig. 4 is a view showing a characteristic of inner pressure of the curtain airbag versus time.

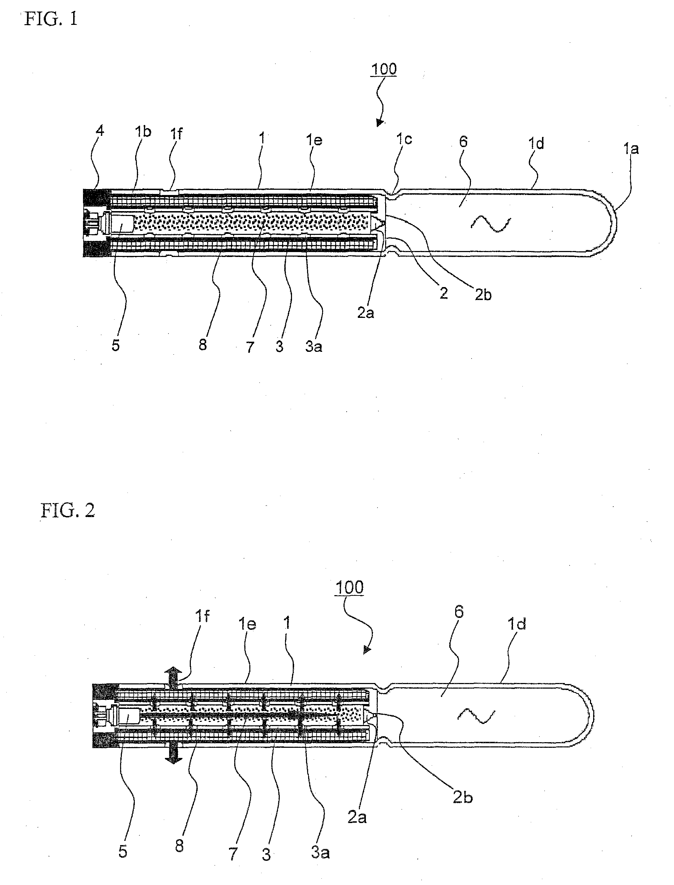

As illustrated in Fig. 1, an inflator 100 of the present embodiment is appropriate for an inflator for use in a curtain airbag (not shown) capable of being deployed at, for example, a side portion of a vehicle interior. A housing thereof is formed into a cylindrical housing 1 having a similar shape as that of a test tube where a bottom portion 1a having a hemisphere shape is formed at an end and an opening portion 1b is formed at the other end, and further, a narrowed portion 1c is formed in a middle portion thereof.

In the narrowed portion 1c of the cylindrical housing 1, an orifice plate 2 serving as a flow amount control member inserted from an opening portion 1b side is fixed in an air-tight manner. At a center portion of the orifice plate 2, an orifice 2a serving as a control hole to be an air flow resistance is formed. A diameter of the orifice 2a is set to be about 1mm, and is blocked in by means of a metal thin plate 2b having a thickness of about 0.4mm that serves as a blocking member.

The cylindrical housing 1 is partitioned into a first chamber 1e and a second chamber 1d by means of the orifice plate 2. At a position situated nearer the opening portion 1b in the first chamber 1e, four gas-blowing outlets 1f each directed to a radial direction are formed. In the first chamber 1e, an inner tube 3 where numerous gas holes 3a are formed over an entire length thereof is inserted. A diameter of the inner tube 3 is set to be about one-second of a diameter of the cylindrical housing 1, and therefore one end of the inner tube 3 is latched on the orifice plate 2 and the other end thereof is latched on a mouthpiece 4 obstructing the opening portion 1b of the cylindrical housing 1.

In the second chamber 1d, a compressed gas (200 to 300kPa) 6 of a helium gas, an argon gas, a nitrogen gas, air, a carbon dioxide gas, nitrous oxide gas, or the like is encapsulated. Further, a gas-generating agent 7 is encapsulated in the inner tube 3 of the first chamber 1e, and at an outside of the inner tube 3, a filter 8 that absorbs and reserves heat of combustion of the gas-generating agent 7, and that captures a residue of the gas-generating agent 7 is inserted.

The filter 8 is formed into a cylindrical shape from a metal-made mesh material and is installed in an inner wall of the first chamber 1e in a close contact manner therewith. An initiator (ignition device) 5 is mounted on the mouthpiece 4 in an air-tight manner. The compressed gas 6 is injected from an injecting hole, which is not shown, provided in the second chamber 1d.

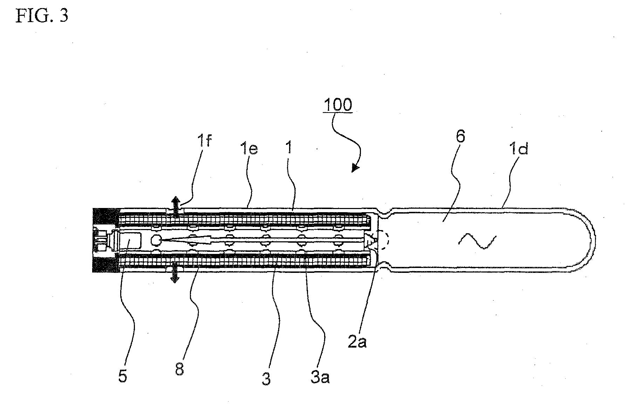

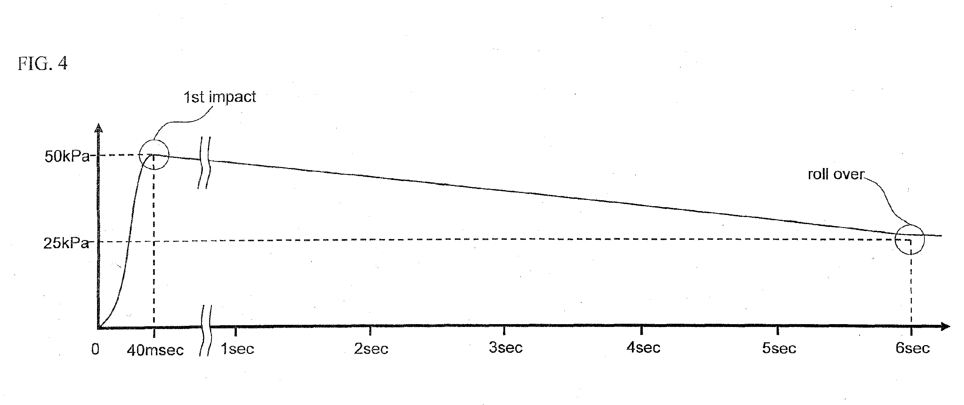

Fig. 2 is a cross-sectional view showing a condition just after the initiator 5 is ignited, Fig. 3 is a cross-sectional view showing a condition after approximately one second has passed from ignition of the initiator, and Fig. 4 is a view showing a characteristic of inner pressure of the curtain airbag versus time. Next, with reference to Fig. 2 through Fig. 4, an operation of the inflator 100 of the embodiment will be explained. When a collision, an overturn, or the like of a motor vehicle occurs, a sensor, not shown, detects the same, an electric signal is transmitted to the initiator 5, and the initiator 5 is ignited.

By means of the ignition of the initiator 5, as shown in Fig. 2, the gas-generating agent 7 is ignited, and the gas-generating agent 7 is burned. The high temperature and high pressure gas is thereby generated. The generated gas passes through a gas hole 3a of the inner tube 3 and the filter 8 having a relatively wide square measure, without receiving a relatively large passing resistance, and blows out from a gas blowing-out hole lf of the cylindrical housing 1. As shown in Fig. 4, after about 40msec of the ignition of the initiator 5, as a first impact, the inner pressure of the curtain airbag is raised up to approximately 50kPa and the same is inflated and deployed.

At the same time as a time of the aforementioned operation, by means of expansion pressure at 300kPa or more of the first chamber 1e, which is generated by the gas-generating agent 7, as shown in Fig. 2, the metal thin plate 2b blocking in the orifice 2a is ruptured or removed. A flowing speed of the compressed gas 6 encapsulated in the second chamber 1d is controlled by receiving a flow resistance of the orifice 2a, and the compressed gas 6 flows into the first chamber 1e at a slow speed, as shown in Fig. 3.

The flowing speed of the compressed gas 6 flowed into the first chamber 1e is further reduced by receiving a resistance of the filter 8 where the flowing resistance is increased by a clogging caused by the residue of the gas-generating agent 7. Further, the compressed gas 6 flows into an inside of the curtain airbag as the gas for a rolling over while performing a heat expanding by receiving the heat of the filter 8 where the heat of combustion of the gas-generating agent 7 is reserved.

As shown in Fig. 4, the inner pressure of the curtain airbag is kept at about 25kPa or more for a time of about 6 seconds or more from the ignition of the initiator 5, while gradually lowering the inner pressure from approximately 50kPa by that the compressed gas 6 is flows in at a lower speed (for the rolling over).

When the nitrous oxide gas (N₂O) is added to the compressed gas 6, the nitrous oxide gas (N₂O) is decomposed by heat of the filter 8 into nitrogen and oxygen (2N₂O → 2N₂ + O₂), and the total number of gas moles becomes 1.5 times that of the nitrous oxide gas before decomposition thereof. Therefore, the cylindrical housing 1 can be compact sized.

As explained above, the inflator 100 according to the present embodiment is configured to be a two-phase curtain airbag inflator where a gas supplying operation by means of the gas generator 7 for satisfying a first impact capability, and the gas supplying operation by means of the compressed gas 6 for satisfying a rolling over capability are separated as functions, and the gas required for each of the capabilities can be supplied at only a necessary amount and for only a necessary time. As a result, a load for the airbag is reduced.

Further, because the gas can continuously be supplied to the airbag for a long time after the first impact occurs as well, a sealing member of an airbag-stitching portion can be eliminated.

## Claims

1. An inflator for supplying gas into an airbag mounted on a motor vehicle and deploying the airbag, comprising:
a first chamber wherein a gas blowing-outlet is provided and a gas-generating agent generating the gas by being ignited by an initiator is encapsulated;
a filter intervening between the gas blowing-outlet of the first chamber and the gas-generating agent, and for absorbing heat of combustion of the gas-generating agent, and capturing a residue of the gas-generating agent;
a second chamber partitioned from the first chamber with a flow amount control member wherein compressed gas is encapsulated; and
a blocking member of a control hole of the flow amount control member for opening the control hole by being ruptured or removed by expanding pressure of the gas-generating agent.

2. The inflator according to Claim 1, wherein the first and second chambers are formed in a cylindrical housing, and the gas blowing-outlet is formed to be directed to a radial direction in an outer peripheral portion of the cylindrical housing.

3. The inflator according to Claim 2, wherein the filter is formed into a cylindrical shape and is installed in a close contact manner to an inner wall of the first chamber.

4. The inflator according to any one of Claims 1 through 3, wherein the compressed gas contains nitrous oxide gas.

5. The inflator according to any one of Claims 1 through 4, wherein the airbag is a curtain airbag capable of deploying at a side portion of a vehicle interior.
